(19) Europäisches Patentamt
European Patent Office
Office européen des brevets

(11) Publication number: **0 314 473 A2**

# (12) EUROPEAN PATENT APPLICATION

(21) Application number: 88310102.4

(22) Date of filing: 27.10.88

(51) Int. Cl.[4]: **G 11 B 7/24**

(30) Priority: 30.10.87 GB 8725516

(43) Date of publication of application: 03.05.89 Bulletin 89/18

(84) Designated Contracting States: DE FR

(71) Applicant: THE GENERAL ELECTRIC COMPANY, p.l.c.
1 Stanhope Gate
London W1A 1EH (GB)

(72) Inventor: McArdle, Ciaran Bernard
39 Carriglea
Firhouse Dublin 24 (IE)

(74) Representative: George, Sidney Arthur
The General Electric Company p.l.c. GEC Patent Department(Wembley Office) Hirst Research Centre East Lane
Wembley Middlesex, HA9 7PP (GB)

## (54) Optical storage devices.

(57) An optical storage device comprises a homogenous film of polymer material into which data items are written by causing crosslinking of regions of the material by cycloaddition. This may be effected by writing with UV light or an ionising radiation. The crosslinking causes a change in the molecular alignment in the region. The polymer material may be a nematic liquid crystalline polyester of the structure:

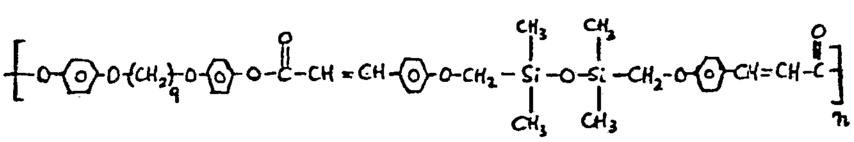

EP 0 314 473 A2

## Description

### Optical Storage Devices.

This invention relates to optical storage devices, such as microfilms or microfiches.

The uses of liquid crystal polymers as optical storage media is known. For example, one form of storage device is disclosed in United State Patent No.4293435. In that device, information is encoded in a cholesteric texture of a liquid crystal polymer and is stored by allowing the polymer to cool below its glass transition temperature (Tg).

British Patent Specification No.214678A describes a device which uses a different effect, in which information is stored in a polymer which is in a viscous state above Tg and which persists over ambient temperature (Ta). In such a device, at a temperature Tf (above Ta) a texture change occurs from an anisotropic but opaque state to a more fluid state which is highly birefringent and therefore optically trasnsmitting. The degree of optical transmission increases with temperature in this fluid region until a temperature Tb, at which an isotropic phase begins to appear, and thereafter transmission drops until a clearing temperature Tc is reached at which the last of the birefringent structure disappears. On heating the polymer to the vicinity of Tb, an optically transmitting state may be produced which is "frozen in" and stored when the temperature drops below Tf.

In such devices the liquid crystal has to be contained in a chamber formed between spaced-apart parallel transparent plates, which chamber must be sealed after the liquid crystal material has been inserted.

It is an object of the present invention to provide an optical storage device in which such containment of liquid crystal polymer material between parallel plates is unnecessary.

According to the invention there is provided an optical storage device, comprising a homogenous film of polymer material into which a data item is written by causing crosslinking of a region of the material by cycloaddition, whereby a change in molecular alignment of the material occurs in that region.

An embodiment of the invention will now be described, by way of example.

A storage device comprises a substrate of glass or of any sufficiently strong transparent plastics material. To the substrate is adhered a film of a nematic liquid crystalline polyester of the following structure:

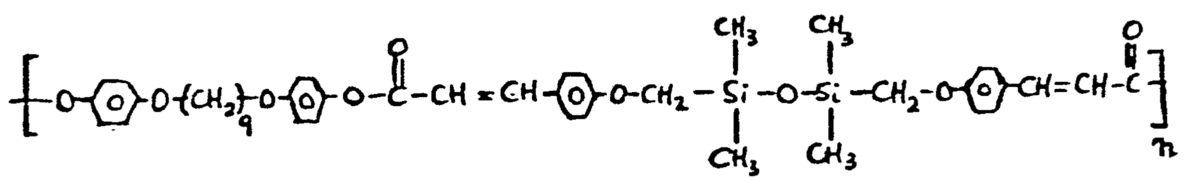

This material can be provided as an amorphous glassy film which is optically clear. The film has a remarkable and unique property in that it is free-standing, i.e. it has a stable shape without the need for containment between parallel plates. In that respect it is comparable to, say, a piece of polythene sheet.

In order to write into the storage device, regions of the film corresponding to information to be stored are exposed to ultra violet light. On exposure to the UV light, the cinnamate residues in the material of the film undergo a 2+2 cycloaddition, which causes crosslinking. An opaque nematic glass is thereby produced in those regions. The writing can be effected by, for example, UV wavelengths (325nm, 442nm) generated by a HeCd laser.

Laser addressing at a sufficiently high intensity produces opaque yellow data on an otherwise clear background. When viewed between crossed polarisers, the laser-addressed regions ( i.e. the nematic glass regions) are birefringent and appear bright, whilst the background amorphous glass is isotropic and appears extinct. The laser beam intensity may be modulated, for example by chopping it to provide pulses of predetermined power. It has been found that suitable reduction of the power level can reduce the extent of the crosslinking, thereby avoiding the yellow colouration, whilst still producing the required phase change for writing.

Hence, different writing intensities cause different birefringent shadings, so that a grey scale can be achieved.

Once the photocyclisation which produces the transformation from amorphous glass to nematic glass has proceeded, the reaction is irreversible and the areas marked by the laser are permanent. Hence, the device is a write-once optical storage device which is addressed at UV wavelengths. It could be used, for example, in the micrographics industry as an updatable microfilm or updatable microfiche device or in laser card applications. Furthermore, the material could be spun on to substrates and used in digital optical disks. A substrate for supporting a film of the polyester may be rigid or flexible, as required. However, the polyester may alternatively be formed into a relatively thick sheet which is completely self-supporting and requires no substrate.

Information could also be written into a device in accordance with the invention by use of other

short-wavelength or ionising radiations, such as X-rays, which also cause crosslinking additions between the polymer chains. Alternatively, writing could be achieved by use of an electron beam.

Addressing at short wavelengths is particularly advantageous in the case of digital optical disks, as the diffraction-limited spot size is reduced to a size which is much smaller than is currently used in other optical storage devices. This gives a convenient increase in data storage capacity.

It will be apparent that a storage device in accordance with the invention can be manufactured by a very simple and relatively cheap process, which does not involve the previously-required construction, filling and sealing of a space between parallel plates.

## Claims

1. An optical storage device, comprising a homogeneous film of polymer material into which a data item is written by causing crosslinking of a region of the material by cycloaddition, whereby a change in molecular alignment of the material occurs in that region.
2. A device as claimed in Claim 1, wherein the cycloaddition reaction is a 2+2 combination.
3. A device as claimed in Claim 1 or Claim 2, wherein the polymer material is changed from an amorphous glassy state to a nematic state by the crosslinking.
4. A device as claimed in any preceding claim, wherein the crosslinking is caused by irradiation by the region by a short-wavelength radiation.
5. A device as claimed in Claim 4, wherein the radiation is ultraviolet light.
6. A device as claimed in Claim 4, wherein the radiation is an ionising radiation.
7. A device as claimed in Claim 6, wherein the radiation comprises X-rays.
8. A device as claimed in Claim 1, Claim 2 or Claim 3, wherein the crosslinking is caused by impingement of an electron beam on the region.
9. A device as claimed in any preceding claim, wherein the polymer material is self-supporting.
10. A device as claimed in any one of Claims 1-7, wherein the polymer material is mounted on a substrate.
11. A device as claimed in any preceding claim, wherein the polymer material is a nematic liquid crystalline polyester of the structure:-

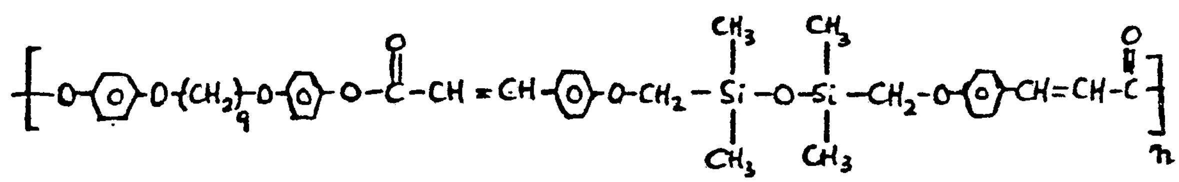

12. An optical storage device substantially as hereinbefore described.